# EUROPEAN PATENT SPECIFICATION

(11) **EP 4 137 382 B1**
(45) Date of publication and mention of the grant of the patent: **09.04.2025**
(21) Application number: 21929447.7
(22) Date of filing: 05.07.2021
(51) Int. Cl.: B61F 1/12, B61F 5/10

(54) **RAIL VEHICLE AND METHOD OF PRODUCING SAME**
SCHIENENFAHRZEUG UND VERFAHREN ZU DESSEN HERSTELLUNG
VÉHICULE FERROVIAIRE ET PROCÉDÉ DE PRODUCTION DE CE DERNIER

(43) Date of publication of application: 22.02.2023
(73) Proprietor: HITACHI, LTD., Chiyoda-ku Tokyo 100-8280 (JP)
(72) Inventor: KIMURA, Sota, Tokyo 100-8280 (JP); KANEYASU, Tadamasa, Tokyo 100-8280 (JP); TANAKA, Shuhei, Tokyo 100-8280 (JP); KINOSHITA, Shinji, Tokyo 100-8280 (JP); HIRUTA, Seiichi, Tokyo 100-8280 (JP)
(74) Representative: MERH-IP Matias Erny Reichl Hoffmann Patentanwälte PartG mbB
(86) International application number: PCT/JP2021/025256
(87) International publication number: WO 2023/281558

(56) References cited:
- EP-A1- 2 500 231
- EP-A1- 2 540 592
- EP-A1- 3 653 464
- WO-A1-2021/033405
- CN-A- 102 107 349
- CN-A- 106 043 342
- CN-A- 107 472 282
- CN-U- 201 863 858
- CN-U- 203 612 009
- JP-A- 2008 230 320
- JP-A- 2012 240 542

## Description

### Technical Field

The present invention relates to a rail vehicle and a method for manufacturing the same.

### Background Art

In general, a body structure of a rail vehicle to be operated along laid tracks (hereafter referred to as a body structure) is a hexahedral structure including an underframe forming a floor surface, side body structures arranged at both end portions of the underframe in a width direction, end body structures arranged at both end portions of the underframe in a longitudinal direction, and a roof body structure arranged above the side body structures and the end body structures.

The underframe includes side beams provided at the both end portions of the underframe in the width direction along the longitudinal direction of the underframe, end beams that connect both end portions of the respective side beams in a longitudinal direction, bolsters provided along the end beams at a predetermined distance from longitudinal end portions of the body structure, and center beams that are arranged along the longitudinal direction of the body structure and that connect the end beams and the bolsters to the body structure.

A center pin provided in a lower surface of the bolster along an up-down direction of the body structure is connected to a bogie frame forming a bogie. When a vehicle is accelerated and decelerated, a load in a front-rear direction of the vehicle is transmitted from the bogie to the bolster via the center pin.

On the other hand, from a viewpoint of improving an assembly property of railroad vehicles, it is required to facilitate attachment of wiring and ducts attached under the floor. To facilitate the attachment, it is effective to form a certain space between the underframe and the bolster and assemble the wiring and the ducts to the body structure in a state in which the bolster is attached to the bogie. As a bogie structure equipped with such a bolster, PTLs 1 and 2 propose a bogie including a bolster that is bolted only to a side beam.
PTL 3 discloses an air spring arrangement for a secondary suspension of a low-floor rail vehicle with a vehicle body which has a bogie connection and an adjoining low-floor area.

### Citation List

### Patent Literature

PTL 1: Europe Patent Application Publication No. 2500231
PTL 2: Europe Patent Application Publication No. 2540592
PTL 3: EP 3 653 464 A1

### Summary of Invention

### Technical Problem

In the underframe structure of the railroad vehicle, in the case of the structure in which the bolster is connected only to the side beam, torsional deformation occurs in the bolster due to a moment load transmitted from the bogie to the bolster via the center pin. In addition, bending deformation occurs in the bolster due to a vertical load transmitted from the bogie via an air spring due to a vertical vibration during traveling.

In the bogie structure provided with the bolster described in PTLs 1 and 2, a bolster structure includes plate-shaped ribs and surface plates along a width direction of a vehicle body structure, and thus a weight of the bolster may increase or a size of a space between the bolster and the underframe may be restricted.

The invention is made from a viewpoint of circumstances in the related art, and an object of the invention is to provide a rail vehicle including an underframe that contributes to improvement in an assembly property of a vehicle body and that includes a lightweight and highly rigid thin bolster, and a method for manufacturing the same.

### Solution to Problem

The above cited problem is solved according to the appended set of claims. In particular, in order to solve the above-described problem, one of typical rail vehicles according to the invention is achieved such that a rail vehicle includes: a bolster provided in an underframe forming a floor portion; and a bogie provided below the bolster.

The bolster includes:
side beam abutting portions that are provided at both end portions of the bolster in a width direction along a longitudinal direction of the rail vehicle, and that abut against side beams provided at both end portions of the underframe in a width direction;
a center beam abutting portion that is provided at a center portion of the bolster in the width direction along the longitudinal direction of the rail vehicle, and that abuts against a center beam provided at a center portion of the underframe in the width direction; and
air spring abutting portions that are provided between the respective side beam abutting portions and the center beam abutting portion, and against which air springs provided in the bogie abut.
The air spring abutting portion includes a plurality of ribs formed radially from a substantially center portion of the air spring abutting portion by a machining process.

The air spring abutting portion includes:
- a longitudinal edge rib adjacent to the center beam abutting portion;
- a pair of width direction edge ribs provided along the width direction at both end portions of the air spring abutting portion in the longitudinal direction;
- an air spring center portion provided at the substantially center portion of the air spring abutting portion;
- a width direction linear rib and a width direction curved rib that connect the air spring center portion and the longitudinal edge rib; and
- a longitudinal linear rib and a longitudinal curved rib that connect the air spring center portion and the width direction edge rib.

### Advantageous Effects of Invention

According to the invention, it is possible to provide the rail vehicle including the underframe that contributes to improvement in an assembly property of a vehicle body and that includes a lightweight and highly rigid thin bolster, and a method for manufacturing the same.

Problems, configurations, and effects other than those described above will be clarified from the following description of embodiments.

### Brief Description of Drawings

[FIG. 1]FIG. 1 is a side view of a railroad vehicle.
[FIG. 2]FIG. 2 is a perspective view of the railroad vehicle as seen from below an underframe forming a floor surface of the railroad vehicle.
[FIG. 3]FIG. 3 is a perspective view (top view) of a bolster according to a first embodiment.
[FIG. 4]FIG. 4 is a perspective view (bottom view) of the bolster according to the first embodiment
[FIG. 5]FIG. 5 is a cross-sectional view illustrating a positional relationship between an underframe provided with the bolster according to the first embodiment and a bogie.
[FIG. 6]FIG. 6 is a perspective view (top view) according to a second embodiment.
[FIG. 7]FIG. 7 is a perspective view (top view) of a bolster according to a third embodiment.
[FIG. 8] FIG..8 is a cross-sectional view of a bolster according to a fourth embodiment (vertical cross-sectional view intersecting an x-direction of an air spring abutting portion forming a bolster).
[FIG. 9]FIG. 9 is a schematic view (corresponding to a C-C cross-sectional view in FIG. 8) illustrating a vertical cross-sectional shape intersecting a longitudinal direction of a rib provided in the air spring abutting portion of the bolster.
[FIG. 10]FIG. 10 is a flowchart illustrating a process of manufacturing a railroad vehicle.

### Description of Embodiments

A rail vehicle is a generic term for vehicles to be operated along laid tracks, and means a railroad vehicle, a monorail vehicle, a tram car, a vehicle of a new transit system, and the like. In the present specification, as a representative example of a rail vehicle, a railroad vehicle will be described as an example, and a mode for carrying out the invention will be described.

Each direction to be described is defined. A longitudinal direction (rail direction) of the railroad vehicle is defined as an x-direction, a width direction (sleeper direction) of the railroad vehicle is defined as a y-direction, and a height direction intersecting the x-direction and the y-direction is defined as a z-direction.

An embodiment of the invention relates to the railroad vehicle having a structure in which a bolster supported by a bogie is fastened to an underframe forming a floor surface of the railroad vehicle by mechanical fastening portions such as bolts. In the railroad vehicle, an interval (space) between the floor surface of the underframe and the bolster in the z-direction is secured so that piping, wiring, and the like can be easily fixed.

Hereinafter, embodiments of the invention will be described with reference to the drawings.

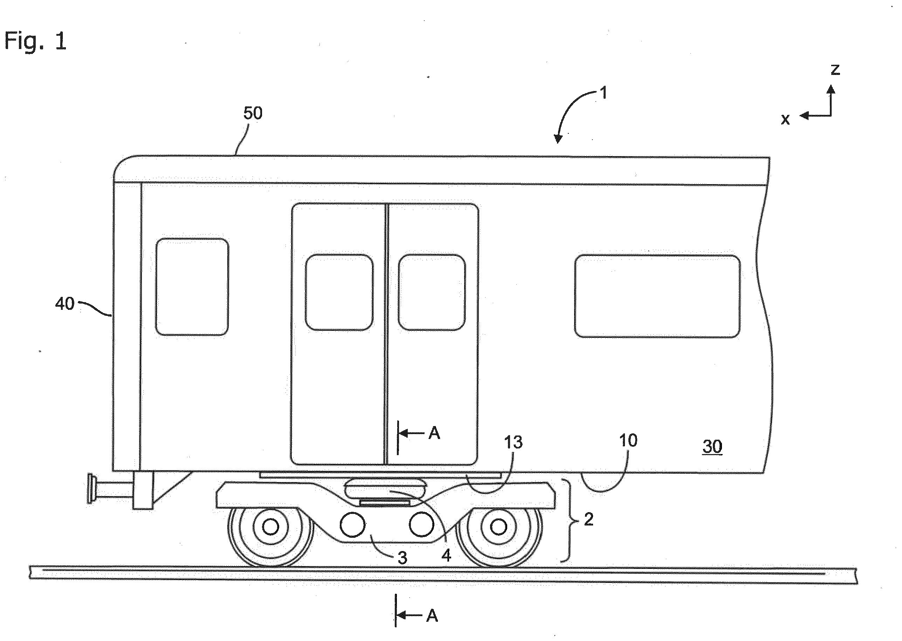

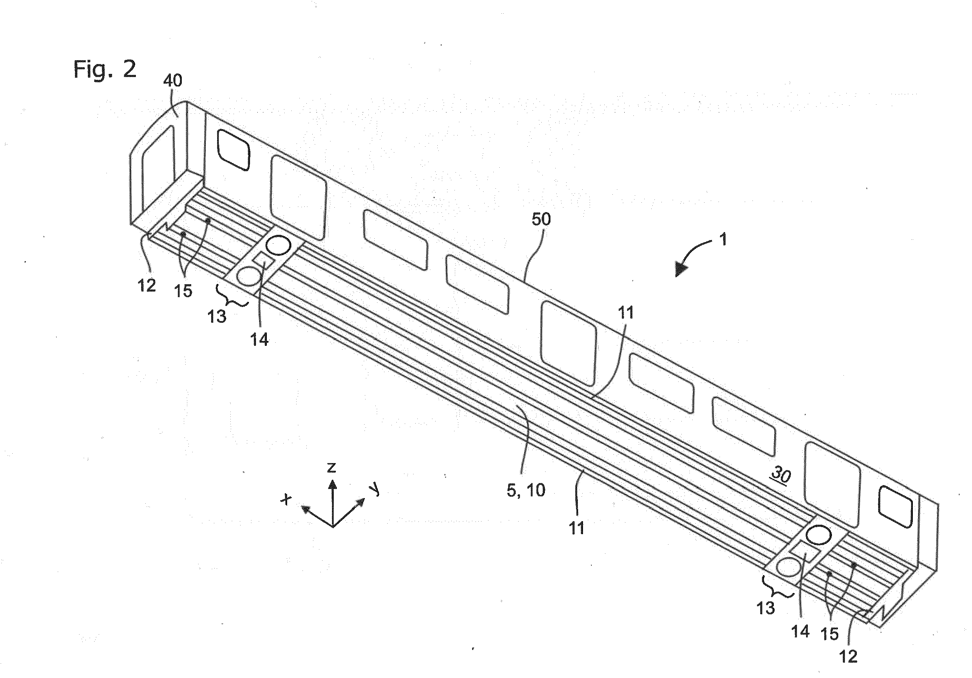

FIG. 1 is a side view of a railroadvehicle, and FIG. 2 is a perspective view of the railroad vehicle as seen from below an underframe forming a floor surface of the railroad vehicle. The railroad vehicle includes an underframe 10 forming a floor surface, end body structures 40 erected on both end portions of the underframe 10 in the x-direction, side body structures 30 erected on both end portions of the underframe 10 in the y-direction, and a roof body structure 50 placed on the end body structures 40 and upper end portions of the side body structures 30. Each of the side body structures 30 is provided with windows, side sliding doors for passengers to get on and off, and the like.

The underframe 10 is a planar structure including a peripheral edge portion that includes end beams 12 provided at the both end portions of the underframe 10 in the x-direction and side beams 11 provided at the both end portions of the underframe 10 in the y-direction, and a floor body structure 5 having the peripheral edge portion at an outer edge. The underframe 10 includes a pair of bolsters 13 provided along the y-direction at portions supported by a bogie 2. One end beam 12 and one bolster 13 are connected by a pair of center beams 15 provided along the x-direction. Although not illustrated, the center beam 15 includes a connecting device.

### <First Embodiment>

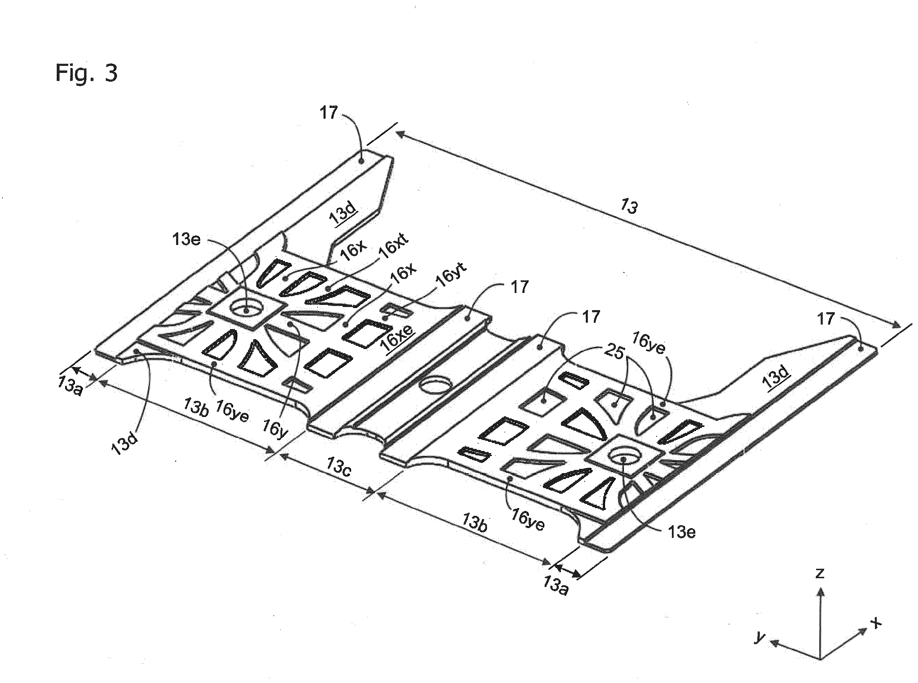

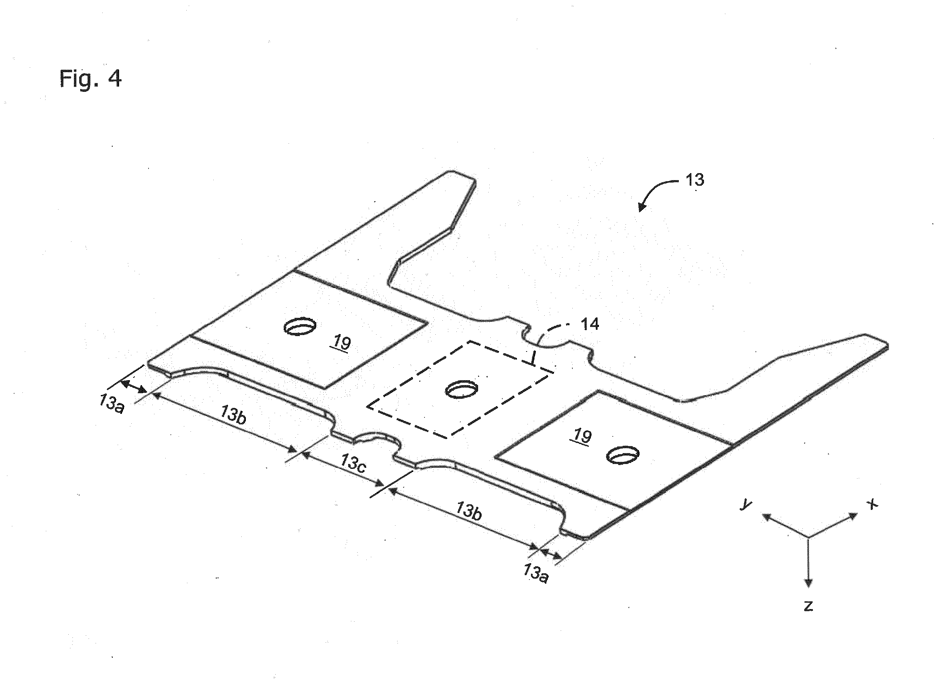

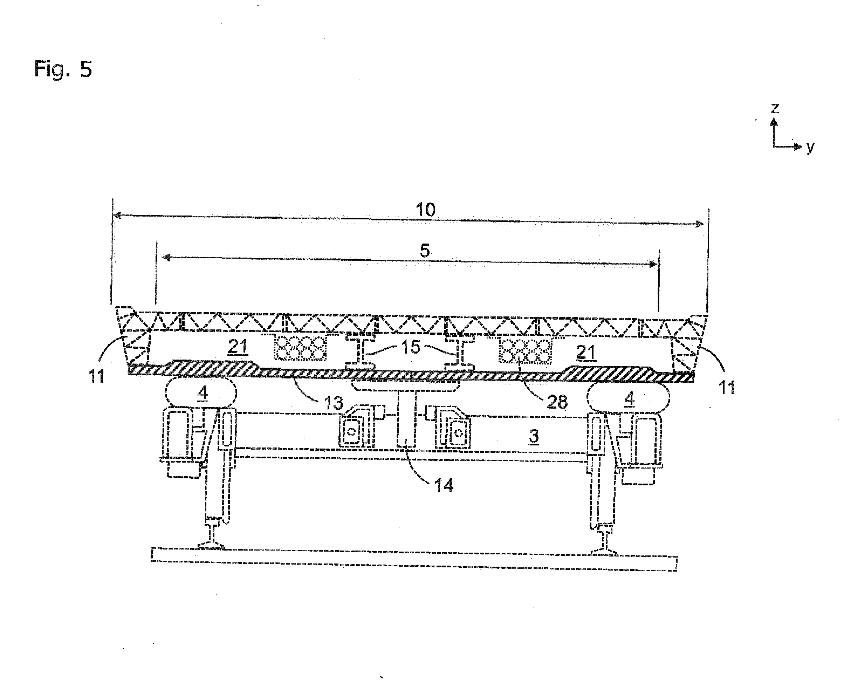

FIG. 3 is a perspective view (top view) of a bolster according to a first embodiment, and FIG. 4 is a perspective view (bottom view) of the bolster according to the first embodiment. FIG. 5 is a cross-sectional view illustrating a positional relationship between an underframe provided with the bolster according to the first embodiment and a bogie.

In the bolster 13, a plurality of bottom portions 25, which are one step lower than an upper surface of the bolster 13, are formed by a cutting process of removing a plurality of regions from a flat plate-shaped block material by a cutting tool, and ribs to be described later are formed between the adjacent bottom portions 25. A plate thickness of the bolster 13 at the bottom portion 25 is preferably equal. The bolster 13 includes side beam abutting portions 13a that are provided along the x-direction at both end portions of the bolster 13 in the y-direction and that abut against the side beams 11, a center beam abutting portion 13c that is provided along the x-direction at a center portion of the bolster 13 in the y-direction and that abuts on the center beams 15, and air spring abutting portions 13b that are provided between the side beam abutting portions 13a and the center beam abutting portion 13c. A pair of the air spring abutting portions 13b against which air springs of the bogie abut have a symmetrical shape with the center beam abutting portion 13c interposed therebetween. Each of the air spring abutting portions 13b includes an air spring center portion 13e against which a center portion of an air spring 4 provided in the bogie 2 abuts at a substantially center portion of the air spring abutting portion 13b.

Each of the air spring abutting portions 13b includes an x-direction edge rib (longitudinal edge rib) 16xe adjacent to the center beam abutting portion 13c, a pair of y-direction edge ribs (width direction edge ribs) 16ye provided along the y-direction at both end portions of the air spring abutting portion 13b in the x-direction, a y-direction linear rib (width direction linear rib) 16y and y-direction curved ribs (width direction curved ribs) 16yt that connect the air spring center portion 13e and the x-direction edge rib 16xe, and x-direction linear ribs (longitudinal linear ribs) 16x and x-direction curved ribs (longitudinal curved ribs) 16xt that respectively connect the air spring center portion 13e and the y-direction edge ribs 16ye.

That is, the air spring abutting portion 13b includes various ribs 16 or the like (the y-direction linear rib 16y, the y-direction curved ribs 16yt, the x-direction linear ribs 16x, and the x-direction curved ribs 16xt) which are cut out radially to connect the air spring center portion 13e to the y-direction edge ribs 16ye (or the side beam abutting portion 13a) and the x-direction edge rib 16xe.

The y-direction linear rib 16y is provided along the y-direction at a center portion of the air spring abutting portion 13b in the x-direction. Similarly, the x-direction linear ribs 16x are provided along the x-direction at center portions of the air spring abutting portion 13b in the y-direction.

Each of the y-direction curved ribs 16yt is provided in the air spring abutting portion 13b in a manner of gradually extending along the y-direction as a distance from the air spring center portion 13e increases. Similarly, each of the x-direction curved ribs 16xt is provided in the air spring abutting portion 13b in a manner of gradually extending along the x-direction as a distance from the air spring center portion 13e increases.

The above-described various ribs 16 or the like (including the x-direction linear ribs 16x and the y-direction linear rib 16y) are provided in the bolster 13 by cutting out from the flat plate-shaped block material. Portions that are surrounded by the various ribs 16 or the like and on which the bottom portions 25 are left do not penetrate the bolster 13 in the z-direction, and are pocket-shaped recessed portions formed by the various ribs 16 or the like, and the bottom portions 25. Since dust, rainwater splashed by wheels, and the like may stay in the pocket-shaped recessed portions, a foam material or the like may be sealed in the pocket-shaped recessed portions to prevent accumulation of the dust, retention of the rainwater, and the like.

The bolster 13 includes reinforcing portions 13d in a manner of respectively straddling both end portions of the side beam abutting portions 13a in the x-direction and the air spring abutting portions 13b. In addition, when the bolster 13 is machined by cutting, planar fastening surfaces 17 to be fastened to the side beams 11 and the center beams 15 that form the underframe 10 are formed at the side beam abutting portions 13a and the center beam abutting portion 13c by the machining process. Although not illustrated, the fastening surfaces 17 are also machined with through holes through which bolts or the like that fasten the bolster 13 to the side beams 11 and the center beams 15 that form the underframe 10 pass, respectively.

As illustrated in FIG. 4, air spring abutting surfaces 19 against which upper support seats of the air springs 4 abut are formed at a lower surface (an air spring 4 side) of the bolster 13 by the machining process. In addition, a seat of a center pin 14 (an abutting position is illustrated by a dotted line in FIG. 4), which serves as an axis when the bogie 2 turns in a horizontal plane and receives a load accompanying acceleration and deceleration of the bogie 2, is fixed to a lower surface of the center beam abutting portion 13c in the center portion of the bolster 13 in the y-direction.

The side beam abutting portion 13a of the bolster 13 may be provided with a receiving portion of a yaw damper that connects the bogie 2 and a body structure 1 and prevents vibration (turning) of the bogie 2 in the horizontal plane during high-speed traveling of the railroad vehicle.

### <Effects>

In FIG. 5, after piping and wiring 28 is fixed to a lower surface of the underframe 10 assembled except for the bolster 13, the bolster 13 is fixed to the side beams 11 and the center beams 15 of the underframe 10 from below the underframe 10 via mechanical fastening portions such as bolts. Since spaces 21 having a z-direction dimension are formed between the floor body structure 5 of the underframe 10 and the upper surface of the bolster 13, the piping and wiring 28 can be provided in the underframe 10 with a small number of manufacturing steps without interfering with the bolster 13.

Since the bolster 13 is manufactured by the cutting process, the various ribs 16 or the like can be integrally provided without requiring welding or the like which may cause a decrease in strength. Therefore, the bolster 13 having no decrease in strength due to heat input caused by welding or the like can reduce bending deformation due to a vertical load transmitted from the bogie 2 to the bolster 13 via the air springs 4 and torsional deformation due to a moment load transmitted from the bogie 2 to the bolster 13 via the center pin 14, by a bending rigidity and a torsional rigidity of the various ribs 16 or the like.

In the bolster 13 manufactured by the cutting process, it is possible to obtain highly accurate abutting surfaces of the side beam abutting portions 13a and the center beam abutting portion 13c that abut against the side beams 11 and the center beams 15 of the underframe 10, respectively. Similarly, since the air spring abutting surfaces 19 of the bolster 13 are also manufactured by the cutting process, it is possible to obtain the air spring abutting surfaces 19 against which the upper support seats of the air springs 4 abut and the highly accurate abutting surfaces against which the seat of the center pin 14 abuts.

Therefore, on the various abutting surfaces of the bolster 13, each portion to be fastened to the bolster 13 comes into contact with the surface, a strong frictional force is generated between each portion mechanically fastened and the corresponding abutting surface of the bolster 13, and thus the railroad vehicle including the underframe 10 can be provided.

### <Second Embodiment>

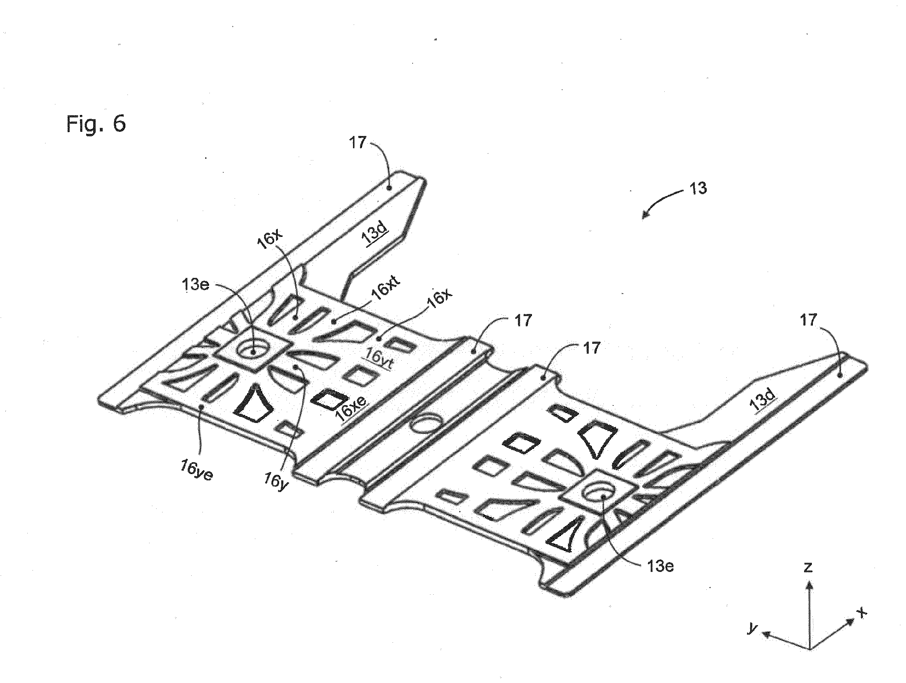

FIG. 6 is a perspective view (top view) according to a second embodiment. Here, a configuration different from the first embodiment and effects derived from the configuration, will be mainly described, and description related to a configuration common to the first embodiment will be omitted.

Each of the y-direction curved ribs 16yt is connected to the x-direction edge rib 16xe in a manner that the y-direction curved rib 16yt gradually extends along the y-direction and a width direction dimension of the y-direction curved rib 16yt gradually increases as the distance from the air spring center portion 13e increases.

Similarly, each of the x-direction curved ribs 16xt is connected to the y-direction edge rib 16ye in a manner that the x-direction curved rib 16xt gradually extends along the x-direction and a' width direction dimension of the x-direction curved rib 16xt gradually increases as the distance from the air spring center portion 13e increases.

### <Effects>

According to the configuration, in addition to the effects described in the first embodiment, it is possible to efficiently improve the rigidity of the various ribs 16 or the like while preventing an increase in a weight of the bolster 13, and to effectively resist the bending deformation of the air spring abutting portion 13b due to the load from the air spring 4 and the torsional deformation due to the load of the center pin 14 provided in the lower surface of the center beam abutting portion 13c.

### <Third Embodiment>

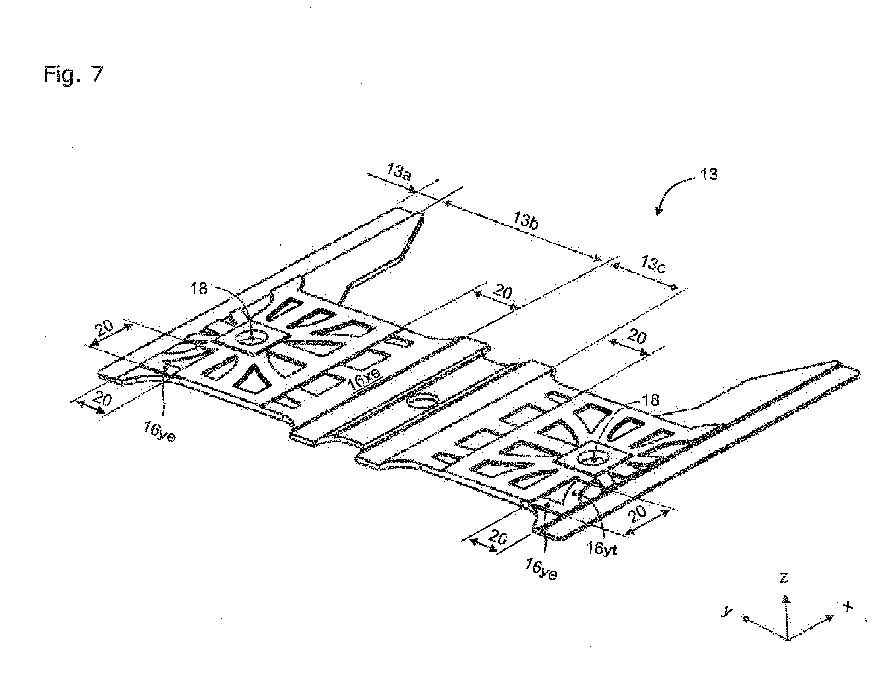

FIG. 7 is a perspective view (top view) of a bolster according to a third embodiment. Here, a configuration different from the first embodiment and the second embodiment and effects derived from the configuration will be mainly described, and description related to a configuration common to the first embodiment and the second embodiment will be omitted.

In the bolster structure according to the first embodiment or the second embodiment 2, cutting portions 20 are provided by the machining process such that z-direction dimensions of the x-direction edge ribs 16xe of the air spring abutting portions 13b of the bolster 13 or the y-direction curved ribs 16yt and the y-direction edge ribs 16ye that are connected to the side beam abutting portions 13a are reduced (such that heights of the ribs are reduced), respectively. That is, a thickness of the air spring abutting portion 13b on a side close to the x-direction edge rib 16xe is thinner than a thickness of the air spring abutting portion 13b on a side close to the air spring center portion 13e.

A portion of the air spring abutting portion 13b in which the cutting portion 20 is provided is a portion where an influence on a rigidity and strength with respect to the bending deformation due to the load from the air spring 4 or the torsional deformation due to the load of the center pin 14 is small.

### <Effects>

By providing the cutting portion 20 in the air spring abutting portion 13b, it ispossible to effectively resist the bending deformation of the air spring abutting portion 13b due to the load from the air spring 4 and the torsional deformation due to the load of the center pin 14 provided in the lower surface of the center beam abutting portion 13c, and to reduce the weight of the bolster 13 to promote weight reduction.

### <Fourth Embodiment>

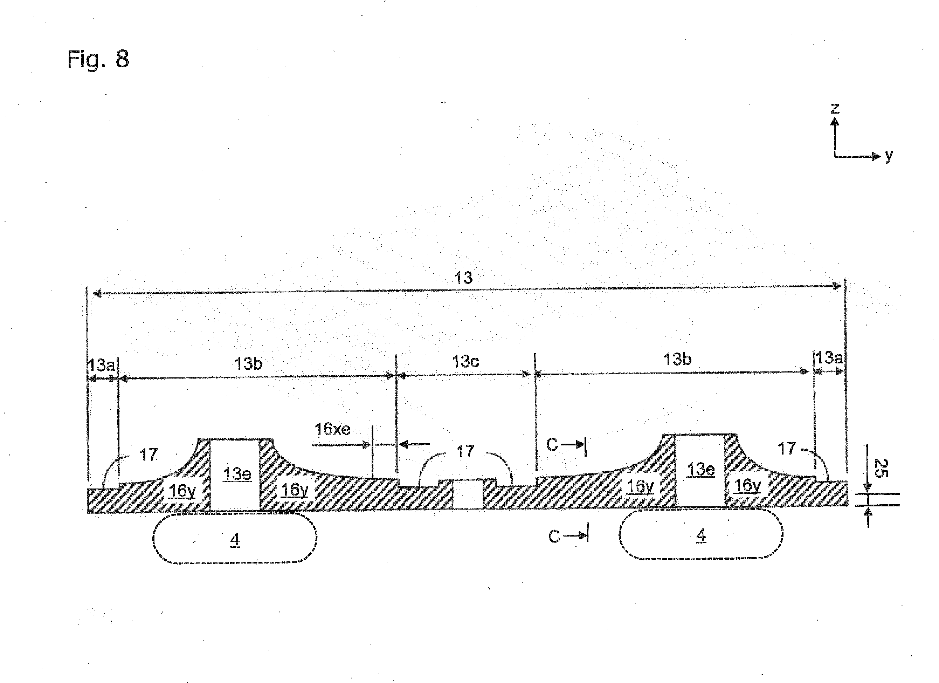

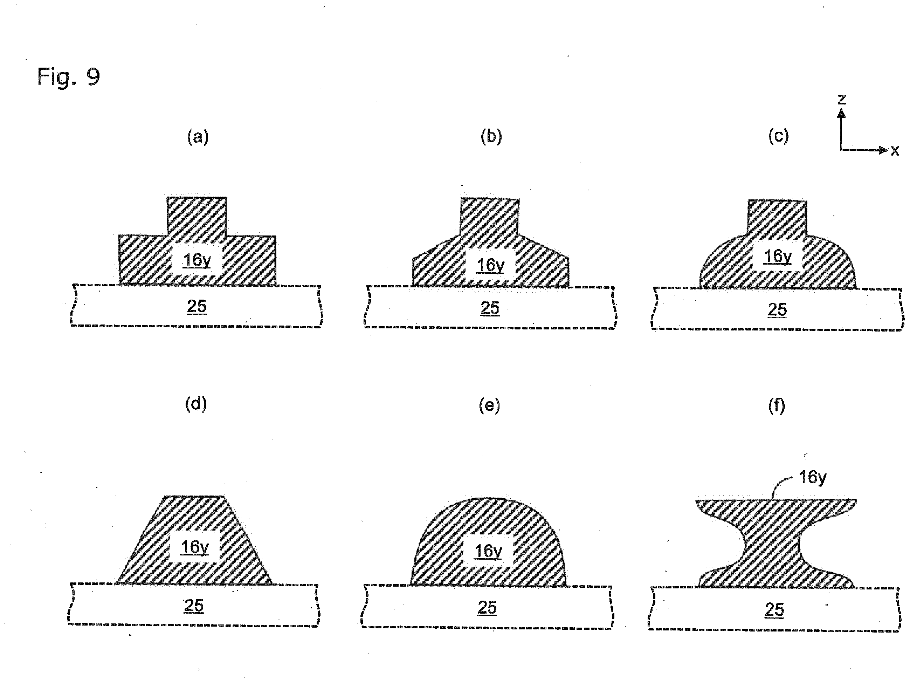

FIG. 8 is a cross-sectional view of a bolster according to a fourth embodiment (vertical cross-sectional view intersecting the x-direction of the air spring abutting portion forming the bolster). FIG. 9 is a schematic view (corresponding to a C-C cross-sectional view in FIG. 8) illustrating a vertical cross-sectional shape intersecting a longitudinal direction of a rib provided at the air spring abutting portion of the bolster. Here, a configuration different from the above-described embodiments and effects derived from the configuration will be described.

According to the second embodiment, as means that increases the rigidity of the various ribs 16 or the like, for example, a configuration is described in which the y-direction curved rib 16yt is connected to the x-direction edge rib 16xe in a manner that the y-direction curved rib 16yt gradually extends along the y-direction and the width direction dimension of the y-direction curved rib 16yt gradually increases as the distance from the air spring center portion 13e increases. On the other hand, the fourth embodiment is an example in which a z-direction dimension of the y-direction linear rib 16y is gradually changed, for example, instead of the manner that the width direction dimension of the y-direction curved rib 16yt gradually increases. Such a shape of the y-direction linear rib 16y can be formed by using a numeral control (NC) device or the like.

The z-direction dimension of the y-direction linear rib 16y is set to be the largest in the vicinity of the air spring center portion 13e and to be gradually reduced as the y-direction linear rib 16y approaches the center beam abutting portion 13c (the x-direction, edge rib 16xe). Although not illustrated, a width direction dimension of a portion in which the z-direction dimension of the y-direction linear rib 16y is large is set to be smaller than a width direction dimension of a portion in which the z-direction dimension of the y-direction linear rib 16y is small, and the width direction dimension of the y-direction linear rib 16y is also gradually changed similarly to the z-direction dimension. That is, a height direction dimension of the y-direction linear rib 16y is largest in the vicinity of the air spring center portion 13e, and the height direction dimension of the y-direction linear rib 16y decreases as the y-direction linear rib 16y approaches the x-direction edge rib 16xe. In addition, the width direction dimension of the y-direction linear rib 16y is the smallest in the vicinity of the air spring center portion 13e, and the width direction dimension of the y-direction linearrib 16y increases as the y-direction linear rib 16y approaches the x-direction edge rib 16xe.

A cross-sectional shape of the y-direction linear rib 16y intersecting a longitudinal direction (corresponding to a cross-sectional view taken along C-C in FIG. 8) may be any shape as long as the y-direction linear rib 16y has both weight reduction and high rigidity, and FIG. 9 illustrates cross-sectional shapes of the various ribs 16 or the like having these features.

A y-direction linear rib illustrated in (a) of FIG. 9 includes a lower structure portion having a rectangular cross section with a long side extending horizontally, and an upper structure portion having a rectangular cross section protruding in the z-direction from a center portion of the lower structure portion in the x-direction.

A y-direction linear rib illustrated in (b) of FIG. 9 includes a lower structure portion having a cross-sectional shape in which a z-direction dimension decreases as a distance from a center portion in the x-direction increases, and an upper structure portion having a rectangular cross section protruding in the z-direction from the center portion of the lower structure portion in the x-direction.

A y-direction linear rib illustrated in (c) of FIG. 9 includes a lower structure portion having a semi-elliptical cross-sectional shape having a major axis on a bottom portion 25 side, and an upper structure portion having a rectangular cross section protruding in the z-direction from a center portion of the lower structure portion in the x-direction.

A y-direction linear rib illustrated in (d) of FIG. 9 has a trapezoidal cross-sectional shape having a long side on the bottom portion 25 side. A y-direction linear rib illustrated in (e) of FIG. 9 has a semi-elliptical cross-sectional shape having a major axis on the bottom portion 25 side. The above-described y-direction linear ribs have the cross-sectional shapes in which an x-direction width on a lower side in the z-direction is larger than an x-direction width on an upper side in the z-direction. Further, a y-direction linear rib illustrated in (f) of FIG. 9 has a wine glass-shaped (or H-shaped) cross-sectional shape.

### <Effects>

By providing the ribs 16 having various shapes having the above-described configurations, it is possible to implement the weight reduction and the high rigidity of the ribs 16, and thus it is possible to effectively resist the bending deformation of the air spring abutting portion 13b due to the load from the air spring 4 and the torsional deformation due to the load of the center pin 14 provided in the lower surface of the center beam abutting portion 13c, and to reduce the weight of the bolster 13 to promote the weight reduction.

### <Manufacturing Method>

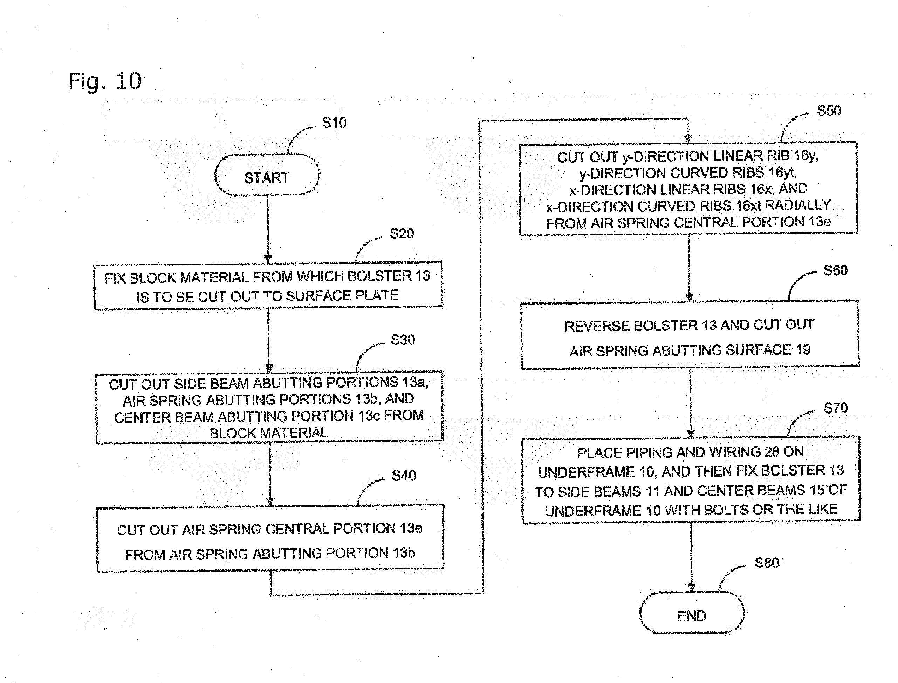

FIG. 10 is a flowchart illustrating a process of manufacturing a railroad vehicle. A method for manufacturing a railroad vehicle will be described with reference to FIG. 10.

In step S10, the manufacturing of the railroad vehicle is started.

In step S20, a block material from which the bolster 13 is to be cut out is prepared and fixed to a surface plate.

In step S30, the side beam abutting portions 13a, the air spring abutting portions 13b, and the center beam abutting portion 13c are cut out from the block material by a milling process or the like.

In step 40, the air spring center portion 13e is cut out from the air spring abutting portion 13b.

In step S50, the y-direction linear rib 16y, the y-direction curved ribs 16yt, the x-direction linear ribs 16x, and the x-direction curved ribs 16xt are cut out radially from the air spring center portion 13e.

In step S60, the bolster 13 is reversed and the air spring abutting surface 19 is cut out.

In step S70, the piping and wiring 28 is placed on the underframe 10, and then the bolster 13 is fixed to the side beams 11 and the center beams 15 of the underframe 10 with bolts or the like.

In step S80, the manufacturing of the railroad vehicle ends.

### <Effects>

By manufacturing the bolster 13 by a cutting process, the bolster 13 integrally provided with the various ribs 16 or the like can reduce the bending deformation due to the vertical load transmitted from the bogie 2 to the bolster 13 via the air spring 4 and the torsional deformation due to the moment load transmitted from the bogie 2 to the bolster 13 via the center pin 14, by the bending rigidity and the torsional rigidity of the various ribs 16 or the like.

In the bolster 13 manufactured by the cutting process, it is possible to obtain highly accurate abutting surfaces of the side beam abutting portions 13a and the center beam abutting portion 13c that abut against the side beams 11 and the center beams 15 of the underframe 10, respectively. Similarly, since the air spring abutting surfaces 19 of the bolster 13 are also manufactured by the cutting process, it is possible to obtain the air spring abutting surfaces 19 against which the upper support seats of the air springs 4 abut and the highly accurate abutting surfaces against which the seat of the center pin 14 abuts.

Therefore, on the various abutting surfaces of the bolster 13, each portion to be fastened to the bolster 13 comes into contact with the surface, and a strong frictional force is generated between each portion mechanically fastened and the corresponding abutting surface of the bolster 13, and thus the railroad vehicle including the underframe 10 can be provided.

After the piping and wiring 28 is fixed to the lower surface of the underframe 10 assembled except for the bolster 13, the bolster 13 is fixed to the side beams 11 and the center beams 15 of the underframe 10 from below the underframe 10 via mechanical fastening portions such as bolts. Since the spaces 21 having the z-direction dimension are formed between the floor body structure 5 of the underframe 10 and the upper surface of the bolster 13, the piping and wiring 28 can be provided in the underframe 10 with a small number of manufacturing steps without interfering with the bolster 13.

In the above-described embodiments, the example in which the bolster is formed from the block material by the cutting process has been described, but a rib can also be formed at a flat plate-shaped block material by, for example, additive manufacturing or the like.

### Reference Signs List

1 body structure
2 bogie
3 bogie frame
4 air spring
5 floor body structure
10 underframe
11 side beam
12 end beam
13 bolster
13a side beam abutting portion
13b air spring abutting portion
13c center beam abutting portion
13d reinforcing portion
13e air spring center portion
14 center pin
15 center beam
16x x-direction linear rib
16y y-direction linear rib
16xe x-direction edge rib
16ye y-direction edge rib
16xt x-direction curved rib
16yt y-direction curved rib
17 fastening surface
19 air spring abutting surface
20 cutting portion
21 space
25 bottom portion
28 piping and wiring
30 side body structure
40 end body structure
50 roof body structure
x longitudinal direction
y width direction
z height direction

## Claims

1. A rail vehicle comprising:
a bolster (13) provided in an underframe (10) forming a floor portion; and
a bogie (2) provided below the bolster (13), wherein
the bolster (13) includes:
side beam abutting portions (13a) that are provided along a longitudinal direction of the rail vehicle, that are provided at both end portions of the underframe (10) in a width direction, and that abut against side beams (11);
a center beam abutting portion (13c) that is provided along the longitudinal direction of the rail vehicle, that is provided at a center portion of the underframe (10) in the width direction, and that abuts against a center beam (15); and
air spring abutting portions (13b) that are provided between the respective side beam abutting portions (13a) and the center beam abutting portion (13c), and against which air springs (4) provided in the bogie (2) abut, and the air spring abutting portion (13b) includes a plurality of ribs formed radially from a substantially center portion (13e) of the air spring abutting portion (13b) by a machining process,
**characterized in that**
the air spring abutting portion (13b) includes:
a longitudinal edge rib (16xe) adjacent to the center beam abutting portion (13c);
a pair of width direction edge ribs (16ye) provided along the width direction at both end portions of the air spring abutting portion (13b) in the longitudinal direction;
an air spring center portion (13e) provided at the substantially center portion of the air spring abutting portion (13b); a width direction linear rib (16y) and a width direction curved rib (16yt) that connect the air spring center portion (13e) and the longitudinal edge rib (16xe) and
a longitudinal linear rib (16x) and a longitudinal curved rib (16xt) that connect the air spring center portion (13e) and the width direction edge rib (16ye).

2. The rail vehicle according to claim 1, wherein
the width direction linear rib (16y) is provided along the width direction at a center portion of the air spring abutting portion (13b) in the longitudinal direction,
the longitudinal linear rib (16x) is provided along the longitudinal direction at a center portion of the air spring abutting portion (13b) in the width direction,
the width direction curved rib (16yt) is connected to the longitudinal edge rib (16xe) in a manner of gradually extending along the width direction as a distance from the air spring center portion (13e) increases, and
the longitudinal curved rib (16xt) is connected to the width direction edge rib (16ye) in a manner of gradually extending along the longitudinal direction as a distance from the air spring center portion (13e) increases.

3. The rail vehicle according to claim 2, wherein
the width direction curved rib (16yt) is connected to the longitudinal edge rib (16xe) in a manner that a width direction dimension of the width direction curved rib (16yt) gradually increases as the distance from the air spring center portion (13e) increases, and
the longitudinal curved rib (16xt) is connected to the width direction edge rib (16ye) in a manner that a width direction dimension of the longitudinal curved rib (16xt) gradually increases as the distance from the air spring center portion (13e) increases.

4. The rail vehicle according to claim 3, wherein
a height direction dimension of the width direction linear rib (16y) is largest in a vicinity of the air spring center portion (13e), and the height direction dimension of the width direction linear rib (16y) decreases as the width direction linear (16y) approaches the longitudinal edge rib (16xe).

5. The rail vehicle according to claim 4, wherein
a width direction dimension of the width direction linear rib (16y) j is smallest in the vicinity of the air spring center portion (13e), and the width direction dimension of the width direction linear rib (16y) increases as the width direction linear rib (16y) approaches the longitudinal edge rib (16xe)

6. The rail vehicle according to claim 2, wherein
a thickness of the air spring abutting portion (13b) on a side close to the longitudinal edge rib (16xe) is thinner than a thickness of the air spring abutting portion (13b) on a side close to the air spring center portion (13e).

7. A method for manufacturing the rail vehicle according to claim **1,** comprising:
a step of forming the bolster (13),
by forming the side beam abutting portions, the air spring abutting portion (13b), and the center beam abutting portion at a surface of a block material by a cutting process,
by forming the air spring center portion (13e) at the air spring abutting portion (13b) by the cutting process,
by forming the ribs radially from the air spring center portion (13e) by the cutting process, and
by forming an air spring abutting surface at a back surface of the block material by the cutting process; and
a step of placing piping and wiring on the underframe (10), and then fixing the bolster (13) to the underframe (10).

## Patentansprüche

1. Schienenfahrzeug, das umfasst:
eine Wiege, die in einem Unterrahmen (10), der einen Bodenabschnitt bildet, vorgesehen ist; und
ein Fahrgestell (2), das unter der Wiege (13) vorgesehen ist, wobei die Wiege (13) enthält:
Seitenträgeranliegeabschnitte (13a), die in einer Längsrichtung des Schienenfahrzeugs vorgesehen sind, an den beiden transversalen Endabschnitten des Unterrahmens (10) vorgesehen sind und an Seitenträgern (11) anliegen;
einen Mittelträgeranliegeabschnitt (13c), der in der Längsrichtung des Schienenfahrzeugs vorgesehen ist, an einem in transversaler Richtung mittigen Abschnitt des Unterrahmens (10) vorgesehen ist und an einem Mittelträger (15) anliegt; und
Luftfederanliegeabschnitte (13b), die zwischen den jeweiligen Seitenträgeranliegeabschnitten (13a) und dem Mittelträgeranliegeabschnitt (13c) vorgesehen sind und an Luftfedern (4), die in dem Fahrgestell (2) vorgesehen sind, anliegen,
wobei der Luftfederanliegeabschnitt (13b) mehrere Rippen aufweist, die durch einen maschinellen Bearbeitungsprozess ausgehend von einem im Wesentlichen mittigen Abschnitt (13e) des Luftfederanliegeabschnitts (13b) radial gebildet sind,
**dadurch gekennzeichnet, dass**
der Luftfederanliegeabschnitt (13b) umfasst:
eine longitudinale Randrippe (16xe) angrenzend an den Mittelträgeranliegeabschnitt (13c);
ein Paar transversaler Randrippen (16ye), die in transversaler Richtung an beiden longitudinalen Endabschnitten des Luftfederanliegeabschnitts (13b) vorgesehen sind;
einen Luftfedermittelabschnitt (13e), der an dem im Wesentlichen mittigen Abschnitt des Luftfederanliegeabschnitts (13b) vorgesehen ist;
eine geradlinige transversale Rippe (16y) und eine gekrümmte transversale Rippe (16yt), die den Luftfedermittelabschnitt (13e) und die longitudinale Randrippe (16xe) verbinden; und
eine geradlinige longitudinale Rippe (16x) und eine gekrümmte longitudinale Rippe (16xt), die den Luftfedermittelabschnitt (13e) und die transversale Randrippe (16ye) verbinden.

2. Schienenfahrzeug nach Anspruch 1, wobei
die geradlinige transversale Rippe (16y) in transversaler Richtung an einem longitudinalen Mittelabschnitt des Luftfederanliegeabschnitts (15b) vorgesehen ist,
die geradlinige longitudinale Rippe (16x) in Längsrichtung an einem transversalen Mittelabschnitt des Luftfederanliegeabschnitts (13b) vorgesehen ist,
die gekrümmte transversale Rippe (16yt) mit der longitudinalen Randrippe (16xe) in der Weise verbunden ist, dass sie sich mit zunehmendem Abstand von dem Luftfedermittelabschnitt (13e) allmählich in transversaler Richtung erstreckt, und
die gekrümmte longitudinale Rippe (16xt) mit der transversalen Randrippe (16ye) in der Weise verbunden ist, dass sie sich mit zunehmenden Abstand von dem Luftfedermittelabschnitt (13e) allmählich in Längsrichtung erstreckt.

3. Schienenfahrzeug nach Anspruch 2, wobei
die gekrümmte transversale Rippe (16yt) mit der longitudinalen Randrippe (16xe) in der Weise verbunden ist, dass eine transversale Abmessung der gekrümmten transversalen Rippe (16yt) mit zunehmendem Abstand von dem Luftfedermittelabschnitt (13e) allmählich zunimmt, und
die gekrümmte longitudinale Rippe (16xt) mit der transversalen Randrippe (16ye) in der Weise verbunden ist, dass eine transversale Abmessung der gekrümmten longitudinalen Rippe (16xt) mit zunehmendem Abstand von dem Luftfedermittelabschnitt (13e) allmählich zunimmt.

4. Schienenfahrzeug nach Anspruch 3, wobei
eine Abmessung in Höhenrichtung der geradlinigen transversalen Rippe (16y) in der Nähe des Luftfedermittelabschnitts (13e) am größten ist und die Abmessung in Höhenrichtung der geradlinigen transversalen Rippe (16y) mit abnehmenden Abstand der geradlinigen transversalen Rippe (16y) von der longitudinalen Randrippe (16xe) abnimmt.

5. Schienenfahrzeug nach Anspruch 4, wobei
eine transversale Abmessung der geradlinigen transversalen Rippe (16y) in der Nähe des Luftfedermittelabschnitts (13e) am kleinsten ist und die transversale Abmessung der geradlinigen transversalen Rippe (16y) mit abnehmendem Abstand der geradlinigen transversalen Rippe (16y) von der longitudinalen Längsrandrippe (16xe) zunimmt.

6. Schienenfahrzeug nach Anspruch 2, wobei
eine Dicke des Luftfederanliegeabschnitts (13b) auf einer Seite in der Nähe der longitudinalen Randrippe (16xe) geringer als eine Dicke des Luftfederanliegeabschnitts (13b) auf einer Seite in der Nähe des Luftfedermittelabschnitts (13e) ist.

7. Verfahren zum Herstellen des Schienenfahrzeugs nach Anspruch 1, das umfasst:
einen Schritt des Bildens der Wiege (13) durch
Bilden der Seitenträgeranliegeabschnitte, des Luftfederanliegeabschnitts (13b) und des Mittelträgeranliegeabschnitts an einer Oberfläche eines Blockmaterials durch einen Schneidprozess;
Bilden des Luftfedermittelabschnitts (13e) an dem Luftfederanliegeabschnitt (13b) durch den Schneidprozess;
Bilden der Rippen radial ausgehend von dem Luftfedermittelabschnitt (13e) durch den Schneidprozess; und
Bilden einer Luftfederanliegefläche an einer hinteren Fläche des Blockmaterials durch den Schneidprozess; und
einen Schritt des Setzens von Rohrleitungen und Verdrahtung auf den Unterrahmen (10) und dann des Befestigens der Wiege (13) an dem Unterrahmen (10).

## Revendications

1. Véhicule ferroviaire comprenant :
une traverse (13) prévue dans un châssis inférieur (10) formant une portion de plancher ; et
un bogie (2) prévu en dessous de la traverse (13), dans lequel la traverse (13) inclut :
des portions de butée de poutre latérale (13a) qui sont prévues le long d'une direction longitudinale du véhicule ferroviaire, qui sont prévues aux deux portions d'extrémité du châssis inférieur (10) dans une direction de la largeur, et qui viennent en butée contre des poutres latérales (11) ;
une portion de butée de poutre centrale (13c) qui est prévue le long de la direction longitudinale du véhicule ferroviaire, qui est prévue au niveau d'une portion centrale du châssis inférieur (10) dans la direction de la largeur, et qui vient en butée contre une poutre centrale (15) ; et
des portions de butée de ressorts pneumatiques (13b) qui sont prévues entre les portions de butée de poutre latérale (13a) respectives et la portion de butée de poutre centrale (13c), et contre lesquelles des ressorts pneumatiques (4) prévus dans le bogie (2) viennent en butée, et
la portion de butée de ressorts pneumatiques (13b) inclut une pluralité de nervures formées radialement depuis une portion sensiblement centrale (13e) de la portion de butée de ressorts pneumatiques (13b) par un processus d'usinage,
**caractérisé en ce que**
la portion de butée de ressorts pneumatiques (13b) inclut :
une nervure de bordure longitudinale (16xe) adjacente à la portion de butée de poutre centrale (13c) ;
une paire de nervures de bordure de direction de largeur (16ye) prévues le long de la direction de la largeur au niveau des deux portions d'extrémité de la portion de butée de ressorts pneumatiques (13b) dans la direction longitudinale ;
une nervure linéaire de direction de largeur (16y) et une nervure incurvée de direction de largeur (16yt) qui connectent la portion centrale de ressorts pneumatique (13e) et la nervure de bordure longitudinale (16xe) ; et
une nervure linéaire longitudinale (16x) et une nervure incurvée longitudinale (16xt) qui connectent la portion centrale de ressorts pneumatiques (13e) et la nervure de bordure de direction de largeur (16ye).

2. Véhicule ferroviaire selon la revendication 1, dans lequel
la nervure linéaire de direction de largeur (16y) est prévue le long de la direction de la largeur au niveau d'une portion centrale de la portion de butée de ressorts pneumatiques (13b) dans la direction longitudinale,
la nervure linéaire longitudinale (16x) est prévue le long de la direction longitudinale au niveau d'une portion centrale la portion de butée de ressorts pneumatiques (13b) dans la direction de la largeur,
la nervure incurvée de direction de largeur (16yt) est connectée à la nervure de bordure longitudinale (16xe) de manière à s'étendre graduellement le long de la direction de la largeur lorsqu'une distance depuis la portion centrale de ressorts pneumatiques (13e) augmente, et
la nervure incurvée longitudinale (16xt) est connectée à la nervure de bordure de direction de largeur (16ye) de manière à s'étendre graduellement le long de la direction longitudinale lorsqu'une distance depuis la portion centrale de ressorts pneumatiques (13e) augmente.

3. Véhicule ferroviaire selon la revendication 2, dans lequel
la nervure incurvée de direction de largeur (16yt) est connectée à la nervure de bordure longitudinale (16xe) de telle manière qu'une dimension de direction de largeur de la nervure incurvée de direction de largeur (16yt) augmente graduellement lorsque la distance depuis la portion centrale de ressorts pneumatiques (13e) augmente, et
la nervure incurvée longitudinale (16xt) est connectée à la nervure de bordure de direction de largeur (16ye) de telle manière qu'une dimension de direction de longueur de la nervure incurvée longitudinale (16xt) augmente graduellement lorsque la distance depuis la portion centrale de ressorts pneumatiques (13e) augmente.

4. Véhicule ferroviaire selon la revendication 3, dans lequel
la dimension de direction de hauteur de la nervure linéaire de direction de largeur (16y) est plus grande dans un voisinage la portion centrale de ressorts pneumatiques (13e), et la dimension de direction de hauteur de la nervure linéaire de direction de largeur (16y) diminue lorsque la nervure de linéaire de direction de largeur (16y) se rapproche de la nervure de bordure longitudinale (16xe).

5. Véhicule ferroviaire selon la revendication 4, dans lequel
une dimension de direction de largeur de la nervure linéaire de direction de largeur (16y) est plus petite dans le voisinage de la portion centrale de ressorts pneumatiques (13e), et la dimension de direction de largeur de la nervure linéaire de direction de largeur (16y) augmente lorsque la nervure linéaire de direction de largeur (16y) se rapproche de la nervure de bordure longitudinale (16xe).

6. Véhicule ferroviaire selon la revendication 2, dans lequel
une épaisseur de la portion de butée de ressorts pneumatiques (13b) sur un côté proche de la nervure de bordure longitudinale (16xe) est plus mince qu'une épaisseur de la portion de butée de ressorts pneumatiques (13b) sur un côté proche de la portion centrale de ressorts pneumatiques (13e).

7. Procédé de fabrication du véhicule ferroviaire selon la revendication 1, comprenant :
une étape comprenant à former la traverse (13),
en formant les portions de butée de poutre latérale, la portion de butée de ressorts pneumatiques (13b), et la portion de butée de poutre centrale au niveau d'une surface d'un matériau en bloc via un processus de coupe,
en formant la portion centrale de ressorts pneumatiques (13e) au niveau de la portion de butée de ressorts pneumatiques (13b) via le processus de coupe,
en formant les nervures radialement par rapport à la portion centrale de ressorts pneumatiques (13e) via le processus de coupe, et
en formant une surface de butée de ressorts pneumatiques au niveau d'une surface arrière du matériau en bloc via le processus de coupe ; et
une étape consistant à placer une tubulure et un câblage sur le châssis inférieur (10), et puis à fixer la traverse (16) sur le châssis inférieur (10).
